# EUROPÄISCHE PATENTSCHRIFT

(11) **EP 3 338 345 B1**
(45) Veröffentlichungstag und Bekanntmachung des Hinweises auf die Patenterteilung: **12.06.2019**
(21) Anmeldenummer: 16739179.6
(22) Anmeldetag: 18.07.2016
(51) Int. Cl.: H02K 5/20

(54) **ELEKTRISCHE MASCHINE MIT GEHÄUSEMANTEL AUS ZWEI MANTELSEGMENTEN**
ELECTRIC MACHINE HAVING A HOUSING JACKET CONSISTING OF TWO JACKET SEGMENTS
MACHINE ÉLECTRIQUE POURVUE D'UNE ENVELOPPE DE CARTER FAITE DE DEUX SEGMENTS D'ENVELOPPE

(30) Priorität: 20.08.2015 DE 102015215952
(43) Veröffentlichungstag der Anmeldung: 27.06.2018
(73) Patentinhaber: Robert Bosch GmbH, 70442 Stuttgart (DE)
(72) Erfinder: PLOEGER, Armin, 31139 Hildesheim (DE); REICHERT, Birgit, 38239 Salzgitter (DE); STEIN, Sebastian, 30459 Hannover (DE); BRUNS, Sebastian, 31171 Nordstemmen (DE); LANGE, Fabian, 30175 Hannover (DE); ROEPKE, Matthias, 31141 Hildesheim (DE); KIRCHHOFF, Karsten, 31196 Sehlem (DE)
(86) Internationale Anmeldenummer: PCT/EP2016/067032
(87) Internationale Veröffentlichungsnummer: WO 2017/029041

(56) Entgegenhaltungen:
- WO-A1-2015/098328
- DE-A1-102008 040 873
- US-A- 4 516 044
- US-A1- 2008 110 664
- US-A1- 2009 102 298

## Beschreibung

### Gebiet der Erfindung

Die Erfindung betrifft eine elektrische Maschine für Kraftfahrzeuge. Insbesondere betrifft die Erfindung ein Gehäuse eines Stators einer Radialflussmaschine.

### Stand der Technik

Für den Einsatz von elektrischen Maschinen für Antriebe, beispielsweise für Kraftfahrzeuge, kann es zunehmend von Bedeutung sein, aufgrund der geforderten begrenzten Platzverhältnisse und aufgrund der gleichzeitig geforderten hohen Leistungsdichte sehr kompakte und leistungsfähige Antriebe bereitzustellen. So kann, abhängig davon, ob die Maschine in den Antriebsstrang integriert ist oder separat angeschlossen ist, eine axiale Baulänge begrenzt sein. Deswegen werden insbesondere bei im Antriebsstrang integrierten Maschinen Axialflussmaschinen eingesetzt.

Elektrische Maschinen mit hohen Leistungsdichten, wie sie etwa für Hybrid- oder Elektrofahrzeuge eingesetzt werden können, weisen in einigen Fällen eine hohe Wärmeentwicklung auf. Dies kann teilweise eine aktive Kühlung erfordern. Ein Lösungsansatz hierfür kann das Anbringen von Kühlrippen oder Kühlkanälen in Kombination mit einem weiteren darüber liegenden Gehäuseteil an einem Außenumfang des Statorgehäuses sein. Hierbei können diese Kühlrippen oder Kühlkanäle einerseits der Leitung einer Kühlflüssigkeit dienen, andererseits kann hierdurch eine Wärmeaustauschfläche erhöht werden. Als Material für das Statorgehäuse wird häufig Stahl verwendet, beispielsweise in Form eines Gussteils oder Blechteils, in das ein Statorpaket eingepresst wird.

Es ist in vielen Fällen gefordert, dass das im Betrieb vom Stator aufgebaute Drehmoment vom Statorgehäuse aufgenommen wird, wozu ein Kraftschluss zwischen Statorpaket und Statorgehäuse notwendig ist. Der Kraftschluss wird in der Regel über eine Presspassung zwischen Statorpaket und Statorgehäuse realisiert. Hierfür wird beim Zusammenbau das Statorgehäuse erwärmt, sodass es sich ausdehnt und das Statorpaket wird gekühlt, sodass es sich zusammenzieht. Die Ausdehnung des Statorgehäuses und das Zusammenziehen des Statorpakets sind so aufeinander abgestimmt, dass sich die beiden Bauteile, meist mit einem Spiel bzw. Toleranz, fügen lassen. Bei der Angleichung der beiden Bauteiltemperaturen dehnt sich das Statorpaket aus und das Statorgehäuse zieht sich zusammen, so dass sich ein hoher Pressdruck zwischen beiden Verbindungspartners ergibt. Die Herstellung der Kühlkanäle oder Kühlrippen kann beispielsweise spanend erfolgen. Diese Bearbeitung ist allerdings in vielen Fällen nicht nur zeit- und kostenintensiv, sondern erfordert zusätzlich auch den Schutz des Statorpakets vor Spänen, Kühlschmierstoff und allgemeinen Verunreinigungen.

Die WO2015/098328A1 offenbart eine elektrische Maschine, insbesondere eine elektrische Radialflussmaschine, mit einem Gehäuse, dessen einteilig gegossener, hohlzylinderförmiger Gehäusemantel mit einem durchgehenden Kühlkanal ausgebildet ist.

Die US4516044 offenbart eine elektrische Maschine mit einem in zwei Mantelsegmente aufgeteilten Gehäusemantel. Eine Kühlmittelführung ist mit radial innenseitig in den Mantelsegmenten angeordneten, nach radial innen offenen Nuten ausgebildet, die mit einem vom Gehäusemantel umschlossenen, radial innen liegenden Gehäuse der Elektrischen Maschine flüssigkeitsdicht zu einem Kühlkanal abgeschlossen sind.

### Offenbarung der Erfindung

Ideen zu Ausführungsformen der vorliegenden Erfindung können unter anderem als auf den nachfolgend beschriebenen Gedanken und Erkenntnissen beruhend angesehen werden. Eine gusstechnische Herstellung von Kühlkanälen in einem Statorgehäuse erfolgt bisher mit einem entsprechend konturierten Gusswerkzeug, was bei komplexer Strömungsführung vergleichsweise teuer ist und hohe Anforderungen an die Auslegung des Gießprozesses stellt. Da allerdings eine gusstechnische Herstellung zur Schaffung von aufwendigeren Kühlkanalstrukturen nach wie vor vorteilhaft erscheint, wäre es wünschenswert, einen Aufwand zur Herstellung der komplexeren Kühlkanalstrukturen zu gering wie möglich zu halten. Ein Lösungsansatz besteht darin, das Gehäuse mit den Kühlkanälen in einen geometrisch einfachen und somit kostengünstig herzustellenden Bereich und einen geometrisch komplexen Bereich zu unterteilen, dessen Herstellkosten höher liegen. Ausführungsformen der vorliegenden Erfindung können also in vorteilhafter Weise geringeren Aufwand und somit geringere Gesamtherstellungskosten für den Gehäusemantel ermöglichen.

Gemäß einem ersten Aspekt der Erfindung wird daher eine elektrische Maschine, insbesondere elektrische Radialflussmaschine, mit einem Gehäuse und einem hohlzylinderförmigen Gehäusemantel vorgeschlagen. Der Gehäusemantel weist ein erstes Mantelsegment mit mehreren voneinander getrennten Kühlkanälen auf, die von Kühlkanalöffnungen an einer ersten umfangsseitigen Stirnfläche des ersten Mantelsegmentes durch das erste Mantelsegment zu Kühlkanalöffnungen an einer zweiten umfangsseitigen Stirnfläche des ersten Mantelsegmentes verlaufen. Der Gehäusemantel weist ein zweites Mantelsegment mit mehreren Verbindungskanälen auf, die jeweils von einer Verbindungskanalöffnung an der ersten umfangsseitigen Stirnfläche des zweiten Mantelsegments durch das zweite Mantelsegment zu einer Verbindungskanalöffnung an einer zweiten umfangsseitigen Stirnfläche des zweiten Mantelsegments verlaufen. Die Verbindungskanalöffnungen sind in den Stirnflächen des zweiten Mantelsegmentes so angeordnet, dass jeweils ein Verbindungskanal zwei im ersten Mantelsegment benachbarte Kühlkanäle so miteinander verbindet, dass die mehreren getrennten Kühlkanäle im ersten Mantelsegment zusammen mit den Verbindungskanälen im zweiten Mantelsegment einen durchgehenden Kühlkanal des Gehäusemantels bilden.

Ein Vorteil ist also insbesondere darin zu sehen, dass durch die Schaffung einfacher geometrischer Strukturen im ersten Mantelsegment eine einfachere und kostengünstigere Herstellung des ersten Mantelsegmentes ermöglicht wird. Gleichzeitig beschränkt sich der höhere herstelltechnische Aufwand für das zweite Mantelsegment auf nur einen Teil des Gehäusemantels, sodass sich in Summe geringere Kosten ergeben können. Das zweite Mantelsegment kann auch als Kühlkanalumlenkung verstanden werden, da beispielsweise ein Kühlkanal über einen Verbindungskanal zu einem benachbarten Kühlkanal im ersten Mantelsegment umgelenkt wird. Das zweite Mantelsegment verläuft gemäß einem Beispiel über eine gesamte axiale Länge des Gehäusemantels. Es auch denkbar, dass sich gemäß eines weiteren Beispiels das zweite Mantelsegment über nur einen Teil der axialen Länge erstreckt. Die Bereiche, an denen sich die jeweiligen Kanalöffnungen an den Stirnflächen gegenüberliegen, sind so abgedichtet, dass kein Kühlfluid aus dem Gehäusemantel austreten kann.

Die umfangseitigen Stirnflächen können sich in ihrer Ebene beispielsweise quer zu einer Umfangsrichtung erstrecken. Gemäß einem Beispiel erstreckt sich eine Ebene der Stirnfläche des ersten und/oder zweiten Mantelsegmentes in radialer Richtung des Gehäusemantels. Unter Kühlfluid können alle flüssigen und/oder gasförmigen Medien verstanden werden, die zu Kühlzwecken bei den gegebenen Durchmessern und Wärmemengen einsetzbar sind.

Gemäß einer Ausführungsform weist das zweite Mantelsegment an seiner Außenfläche eine Eintrittsöffnung und eine Austrittsöffnung zum Einleiten von Kühlfluid in den bzw. zum Ausleiten von Kühlfluid aus dem durchgehenden Kühlkanal auf. Dies kann den Vorteil haben, dass Kühlfluid von außen über die Verbindungskanäle in die Kühlkanäle des Gehäusemantels eingeleitet werden kann. Diese Eintrittsöffnung und Austrittsöffnung können als Stutzen ausgeführt sein, die einen mechanisch stabilen Anschluss von externen Leitungen oder von Schläuchen ermöglichen. In einem Beispiel ragen diese Stutzen in radialer Richtung des Gehäusemantels vom zweiten Mantelsegment ab. In einem weiteren Beispiel ragen diese Stutzen in axialer Richtung des Gehäusemantels vom zweiten Mantelsegment ab.

Gemäß einer Ausführungsform verlaufen die mehreren voneinander getrennten Kühlkanäle im ersten Mantelsegment parallel zueinander. Dies kann den Vorteil haben, dass eine sehr einfache homogene geometrische Form entsteht, die kostengünstig herstellbar ist. So können beispielsweise derartige durchgehende Geometrien zunächst einstückig und kontinuierlich in größeren Abmaßen hergestellt und danach zur Herstellung der endgültigen Form durch Trennverfahren geteilt bzw. gebogen werden. Parallele Kühlkanäle können weiterhin eine thermisch effektive Anordnung der Kühlkanäle im ersten Mantelsegment darstellen, sodass ein effektiver Wärmeabtransport aus den zu kühlenden Bereichen ermöglicht wird.

Gemäß einer Ausführungsform ist eine Mantelfläche des zweiten Mantelsegments rechteckig ausgeführt. Dies kann den Vorteil einer kosteneffektiven Herstellung bedeuten, da diese rechteckigen Formen vergleichsweise einfach herstellbar sind und Gussformen und Gusswerkzeuge einfach gehalten werden können.

Gemäß einer Ausführungsform beträgt eine Mantelfläche des zweiten Mantelsegmentes weniger als 20 Prozent einer Mantelfläche des ersten Mantelsegmentes. Gemäß einer weiteren Ausführungsform beträgt eine Mantelfläche des zweiten Mantelsegmentes weniger als 10 Prozent einer Mantelfläche des ersten Mantelsegmentes. Hierbei kann vorteilhaft eine Größe des komplexeren und dadurch mit höherem kostentechnischem Aufwand herzustellenden zweiten Mantelsegmentes verringert werden. Einerseits ist zwar eine möglichst kleine Ausführung des zweiten Mantelsegmentes aus Sicht der Kosten und eines Herstellaufwandes wünschenswert, allerdings sollten die Verbindungskanäle so angeordnet und ausgeführt sein, dass das das zweite Mantelsegment keinen nennenswerten Strömungswiderstand für das Kühlfluid darstellt, beispielsweise durch Knicke oder starke strömungstechnische Umlenkung des Kühlfluidstromes. Ein weiterer Aspekt kann mechanische Stabilität des zweiten Mantelsegmentes insbesondere im Zusammenhang mit einem Fügeprozess sein.

Gemäß einer Ausführungsform sind das erste und/oder das zweite Mantelsegment einstückig ausgeführt. Dies kann den Vorteil haben, dass zur Schaffung einer Kühlkanalstruktur ein Fügeprozess von zwei separaten Bauteilen entfallen kann. Dies kann neben Kostenvorteilen auch eine höhere Dichtheit und Zuverlässigkeit der Kühlkanalstruktur bewirken.

Gemäß einer Ausführungsform ist das erste Mantelsegment mit dem zweiten Mantelsegment verschweißt. Auf diese Weise kann eine nach außen dichte und gleichzeitig mechanisch dauerhaft stabile Verbindung der beiden Bauteile erfolgen. Zudem sind im Stand der Technik verschiedene geeignete Schweißverfahren bekannt und erprobt.

Gemäß einer Ausführungsform ist das erste Mantelsegment durch Strangpressen gefertigt. Das Biegen des ersten Mantelsegments aus einem Strangpressprofil kann den Vorteil haben, dass ein Rohteil günstig herstellbar ist, der Biegeprozess robust ist und kaum Verschnitt entsteht. Gemäß einem Beispiel kann für Baukastenvarianten eine Geometrieänderung des Strangpressprofils über eine Änderung des Strangpresswerkzeugs, beispielsweise einer Pressmatrize, erfolgen.

Gemäß einer Ausführungsform ist das zweite Mantelsegment gusstechnisch gefertigt. Durch Gusstechnik können vorteilhaft vergleichsweise komplexe Formen erzeugt werden, was beispielsweise eine Vielzahl verschiedener Anordnungen der Verbindungskanäle im zweiten Mantelsegment ermöglichen kann. In einem Beispiel können Geometrien der Stirnflächen der Mantelsegmente so ausgeführt sein, dass eine verbesserte Schweißbarkeit erreicht wird, indem zum Beispiel durch die Anbringung von Fasen bzw. Radien Stumpfnähte neben einer I-Naht auch als V-, Y- oder X-Naht ausführbar sind. Diese unterscheiden sich in Hinblick auf den Verbindungsquerschnitt.

Es wird darauf hingewiesen, dass einige der möglichen Merkmale und Vorteile der Erfindung hierin mit Bezug auf unterschiedliche Ausführungsformen beschrieben sind. Ein Fachmann erkennt, dass die Merkmale in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt ein erstes Mantelsegment eines Gehäusemantels einer erfindungsgemäßen elektrischen Maschine.
Fig. 2 zeigt ein zweites Mantelsegment eines Gehäusemantels einer erfindungsgemäßen elektrischen Maschine.
Fig. 3 zeigt einen Gehäusemantel einer erfindungsgemäßen elektrischen Maschine mit einem ersten und zweiten Mantelsegment.
Fig. 4 zeigt einen Gehäusemantel einer erfindungsgemäßen elektrischen Maschine mit einem ersten und zweiten Mantelsegment in einer Schnittdarstellung im Bereich des zweiten Mantelsegmentes.
Fig. 5 zeigt einen Teilbereich eines Gehäusemantels einer erfindungsgemäßen elektrischen Maschine mit einem ersten und zweiten Mantelsegment sowie stirnseitigen Abdeckungen und radial verlaufenden Anschlussstutzen in Schnittdarstellung.
Fig. 6 zeigt eine räumliche Gesamtansicht eines Gehäusemantels einer erfindungsgemäßen elektrischen Maschine mit stirnseitigen Abdeckungen und radial verlaufenden Anschlussstutzen.
Fig. 7 zeigt eine räumliche Gesamtansicht eines Gehäusemantels einer erfindungsgemäßen elektrischen Maschine mit stirnseitigen Abdeckungen und axial verlaufenden Anschlussstutzen.
Fig. 8 zeigt in einer Schnittdarstellung einen Teilbereich eines Gehäusemantels einer erfindungsgemäßen elektrischen Maschine mit stirnseitigen Abdeckungen und axial verlaufenden Anschlussstutzen.

Die Figuren sind lediglich schematisch und nicht maßstabsgetreu. Gleiche Bezugszeichen bezeichnen in den Figuren gleiche oder gleichwirkende Merkmale.

### Ausführungsformen der Erfindung

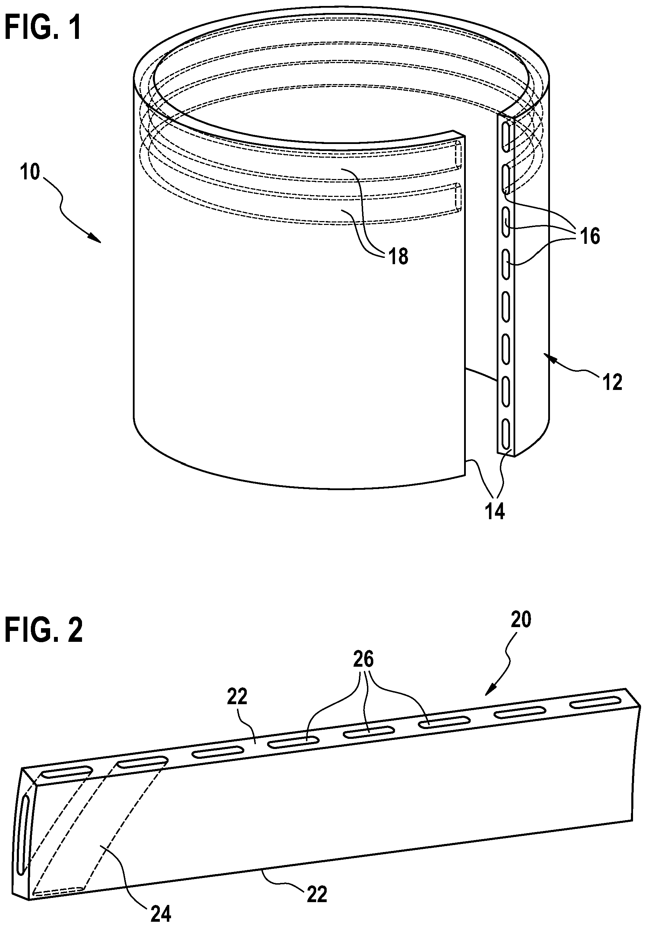

Fig. 1 zeigt ein erstes Mantelsegment 12 eines Gehäusemantels 10 einer erfindungsgemäßen elektrischen Maschine. Das erste Mantelsegment 12 weist eine gebogene Form auf, die einen Ausschnitt aus einer kreiszylindrischen Form des Gehäusemantels 10 darstellt. Das erste Mantelsegment 12 ist bei seiner Herstellung durch Strangpressen erzeugt worden und in einem darauffolgenden Arbeitsschritt in seine endgültige Form gebogen worden. Das erste Mantelsegment 12 weist an den jeweiligen umfangsseitigen Stirnflächen 14 Kühlkanalöffnungen 16 auf. Diese Kühlkanalöffnungen 16 stellen einen Zugang zu den jeweils voneinander getrennten Kühlkanälen 18 da. Zur besseren Veranschaulichung ist hier beispielhaft lediglich zwei im Inneren des ersten Mantelsegments 12 verlaufende Kühlkanäle 18 gestrichelt dargestellt. Hierbei verlaufen die einzelnen Kühlkanäle 18 in Umfangsrichtung des ersten Mantelsegmentes 12 jeweils parallel zueinander. Die jeweiligen Kühlkanäle 18 verlaufen also von einer ersten umfangsseitigen Stirnfläche 14 des ersten Mantelsegments 12 zur zweiten umfangsseitigen Stirnfläche 14 des ersten Mantelsegments 12 über den Umfang des ersten Mantelsegments 12. Die Herstellschritte sind durch eine einfache Geometrie vergleichsweise kostengünstig umsetzbar.

In Fig. 2 ist ein Beispiel eines zweiten Mantelsegments 20 eines Gehäusemantels 10 einer erfindungsgemäßen elektrischen Maschine gezeigt. Zwischen zwei umfangsseitigen Stirnflächen 22 des zweiten Mantelsegmentes 20 verlaufen im Inneren des zweiten Mantelsegmentes 20 Verbindungskanäle 24. Diese Verbindungskanäle 24 enden an den jeweiligen umfangsseitigen Stirnflächen 22 an Verbindungskanalöffnungen 26. Diese Verbindungskanalöffnungen 26 sind dabei so angeordnet, dass sie jeweils einer Kühlkanalöffnung 16 des ersten Mantelsegments 12 gegenüberliegenden und somit ein im Inneren der Kühlkanäle 18 (siehe Fig. 1) befindliches Kühlfluid (nicht gezeigt) in einen Verbindungskanal 24 weiterleiten können. Gleiches gilt entsprechend für Verbindungskanalöffnungen 26, die derartig einer Kühlkanalöffnung 16 gegenüber angeordnet sind, dass Kühlfluid vom Verbindungskanal 24 in einen Kühlkanal 18 weitergeleitet wird.

In Fig. 2 ist lediglich beispielhaft ein Verbindungskanal 24 gestrichelt dargestellt, der im Inneren des zweiten Mantelsegmentes 20 verläuft. Hierbei verbindet der Verbindungskanal 24 zwei benachbarte und im ersten Mantelsegment 12 zunächst voneinander getrennte Kühlkanäle 18 miteinander, sodass ein durchgehender Kühlkanal, hier zunächst beispielhaft mit zwei benachbarten Kühlkanälen 18 gezeigt, entsteht. Mit der Gesamtheit aller Verbindungskanäle 24 entsteht somit ein durchgehender Kühlkanal des Gehäusemantels 10. Der schräge Verlauf des Verbindungskanals 24 ergibt sich mit anderen Worten also durch die Verbindung zweier parallel angeordneter und ursprünglich getrennter Kühlkanäle 18, wobei der Verbindungskanal 24 auch als Kühlkanalumlenkung verstanden werden kann. Eine Herstellung des zweiten Mantelsegmentes 20 ist beispielsweise gusstechnisch erfolgt. Durch eine gusstechnische Herstellung können vorteilhaft komplexere geometrische Strukturen geschaffen werden.

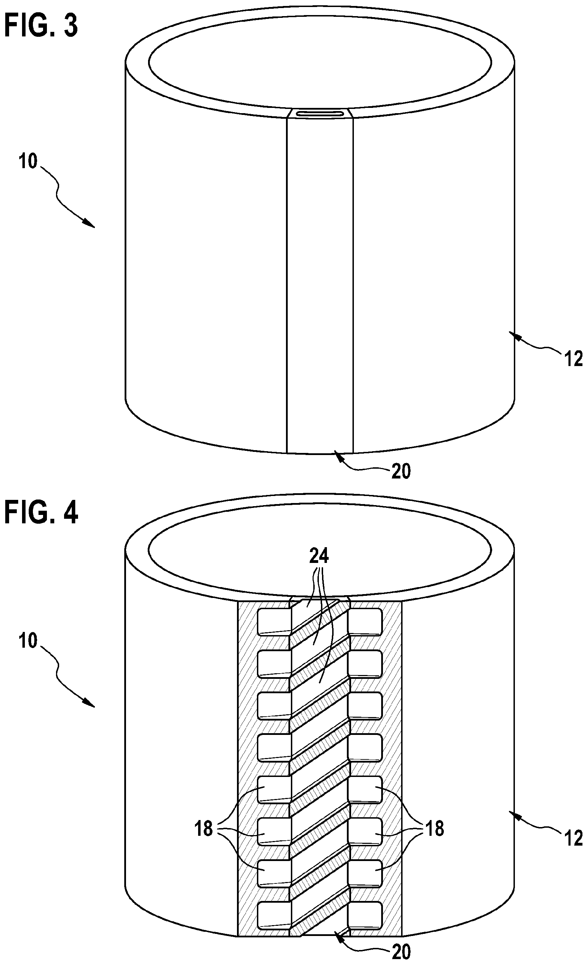

In Fig. 3 ist eine Gesamtansicht eines Gehäusemantels 10 einer erfindungsgemäßen elektrischen Maschine in räumlicher Darstellung gezeigt. Hier sind nun das erste Mantelsegment 12 und das zweite Mantelsegment 20 gefügt, sodass sich eine hohlzylinderförmige Form des Gehäusemantels 10 ergibt. Das Fügen ist beispielsweise durch Verschweißen des ersten Mantelsegmentes 12 mit dem zweiten Mantelsegment 20 erfolgt. Hierbei ist das Fügen derart erfolgt, dass ein Kühlfluid ausschließlich im Inneren des ersten Mantelsegmentes 12 bzw. im Inneren des zweiten Mantelsegmentes 20 verbleibt und nicht über die Stirnflächen 14, 22 nach außen gelangen kann.

Die Größe des zweiten Mantelsegmentes 20 ist im Vergleich zur Größe des ersten Mantelsegmentes 12 deutlich geringer. Hierdurch können Gesamtkosten zur Herstellung des Gehäusemantel verringert werden, weil durch eine Verkleinerung des zweiten Mantelsegmentes 20 die höheren Kosten zur Herstellung des zweiten Mantelsegmentes 20 geringer gehalten werden können und durch die einfacheren geometrischen Strukturen des ersten Mantelsegmentes 12 eine vergleichsweise preiswertere Herstellung des ersten Mantelsegmentes 12 erreicht werden kann. In einem Beispiel beträgt die Mantelfläche des zweiten Mantelsegmentes 20 weniger als 20 Prozent der Mantelfläche des ersten Mantelsegmentes 12. In einem weiteren Beispiel beträgt die Mantelfläche des zweiten Mantelsegmentes 20 weniger als 10 Prozent der Mantelfläche des ersten Mantelsegmentes 12.

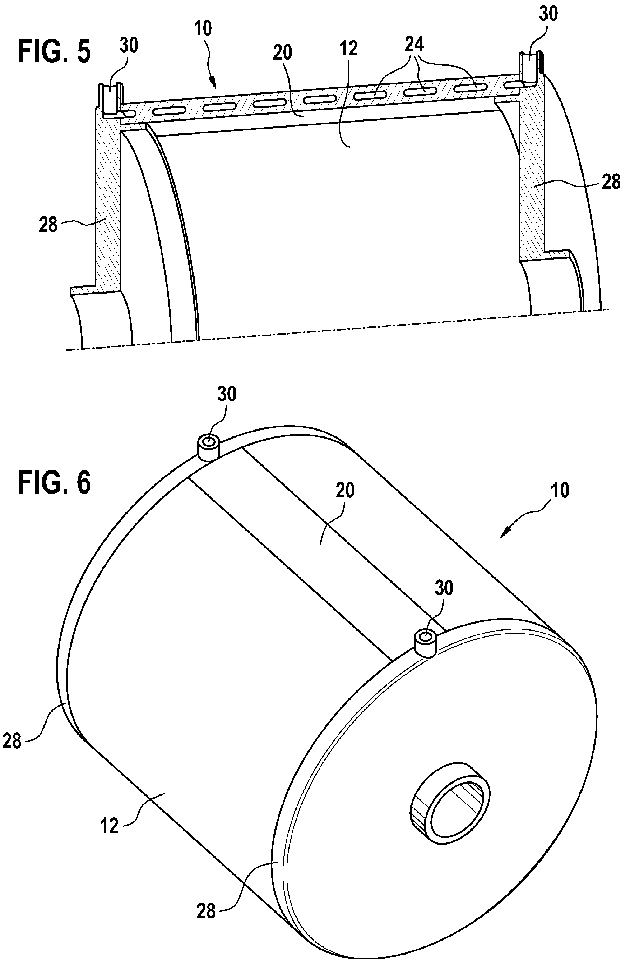

In Fig. 4 ist ein Gehäusemantel 10 entsprechend der Fig. 3 dargestellt, allerdings ist zur besseren Veranschaulichung ein Teilbereich des Gehäusemantel 10 im Bereich des zweiten Mantelsegmentes 20 in einer tangentialen Schnittdarstellung gezeigt. Hierbei sind Ansätze der im ersten Mantelsegment 12 im Inneren verlaufenden Kühlkanäle 18 zu sehen. Weiterhin sind die im zweiten Mantelsegment 20 schräg verlaufenden Verbindungskanäle 24 sichtbar. Die jeweils an den axialen enden des Gehäusemantel 10 angeordneten Verbindungskanäle 24 können eine Eintrittsöffnung bzw. eine Austrittsöffnung an den axialen Enden des zweiten Mantelsegmentes 20 bilden (siehe Fig. 5).

In Fig. 5 ist ein Ausschnitt eines Gehäusemantels 10 einer erfindungsgemäßen elektrischen Maschine gezeigt, wobei der Schnitt hier durch das zweite Mantelsegment 20 verläuft. Man kann hier die Verbindungskanäle 24 im Querschnitt sehen. An den axialen Enden des Gehäusemantels 10 ist zusätzlich jeweils eine stirnseitige Abdeckung 28 gezeigt. Diese kann vorteilhaft einen zusätzlichen Schutz eines beispielsweise innenliegenden Statorpakets vor äußeren Einflüssen, beispielsweise Schmutz, Partikeln oder Feuchtigkeit, bieten. An den axialen Enden des zweiten Mantelsegments 20 ist jeweils eine Eintrittsöffnung bzw. Austrittsöffnung 30 angeordnet. Diese sind hier als Anschlussstutzen ausgeführt, die beispielsweise einen Anschluss von Verbindungsrohren oder Verbindungsschläuchen ermöglichen können.

Im hier gezeigten Beispiel ragen die Anschlussstutzen der Eintrittsöffnung bzw. Austrittsöffnung 30 in radialer Richtung vom Gehäusemantel 10 ab. In Fig. 6 ist die beispielhafte Ausführung des Gehäusemantels 10 mit den stirnseitigen Abdeckungen 28 nochmals in räumlicher Gesamtdarstellung gezeigt. Insbesondere die stirnseitigen Abdeckungen 28 sind hier in ihrer gesamten Größe dargestellt. In einem Beispiel sind die Anschlussstutzen der Eintrittsöffnung bzw. Austrittsöffnung 30 in der stirnseitigen Abdeckung 28 angeordnet.

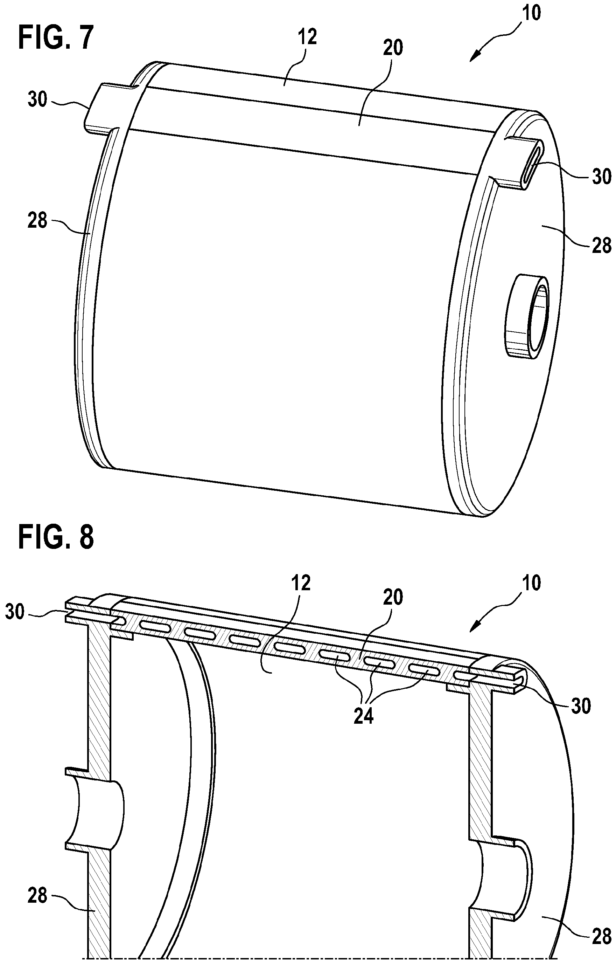

In Fig. 7 ist, ähnlich wie in Fig. 6, ein Gehäusemantel 10 mit stirnseitigen Abdeckungen 28 gezeigt, wobei hier die Eintrittsöffnung bzw. Austrittsöffnungen 30 als Anschlussstutzen ausgeführt sind, die in der stirnseitigen Abdeckung 28 angeordnet sind und in axialer Richtung des Gehäusemantels abragen. Beispielhaft ist hier gezeigt, dass ein Querschnitt der Eintrittsöffnung bzw. Austrittsöffnung 30 eine längliche Form aufweist. Dies kann vorteilhaft eine platzsparende Bauform der Anschlussstutzen der Eintrittsöffnung bzw. Austrittsöffnung 30 ermöglichen. Vorteilhaft kann hierbei weiterhin sein, dass durch vorteilhafte längliche Ausführung der Kühlkanäle 18 bzw. der Verbindungskanäle 24 bei ausreichendem Durchsatz von Kühlfluid trotzdem eine flache bzw. dünne Bauform des Gehäusemantels 10 erreicht werden kann. In Fig. 8 ist das in Fig. 7 beispielhaft gezeigte Ausführungsbeispiel in räumlicher Schnittdarstellung im Bereich des zweiten Mantelsegments 20 gezeigt.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Elektrische Maschine, insbesondere elektrische Radialflussmaschine, mit einem Gehäuse, dessen hohlzylinderförmiger Gehäusemantel (10) aufweist:
ein erstes Mantelsegment (12) mit mehreren voneinander getrennten Kühlkanälen (18), die von Kühlkanalöffnungen (16) an einer ersten umfangsseitigen Stirnfläche (14) des ersten Mantelsegmentes (12) durch das erste Mantelsegment (12) zu Kühlkanalöffnungen (16) an einer zweiten umfangsseitigen Stirnfläche (14) des ersten Mantelsegmentes (12) verlaufen;
**dadurch gekennzeichnet, dass** der Gehäusemantel (10) ein zweites Mantelsegment (20) mit mehreren Verbindungskanälen (24) aufweist, die jeweils von einer Verbindungskanalöffnung (26) dazu an der ersten umfangsseitigen Stirnfläche (22) des zweiten Mantelsegments (20) durch das zweite Mantelsegment (20) zu einer Verbindungskanalöffnung (26) an einer zweiten umfangsseitigen Stirnfläche (22) des zweiten Mantelsegments (20) verlaufen;
wobei die Verbindungskanalöffnungen (26) in den Stirnflächen (22) des zweiten Mantelsegmentes (20) so angeordnet sind, dass jeweils ein Verbindungskanal (24) zwei im ersten Mantelsegment (12) benachbarte Kühlkanäle (18) so miteinander verbindet, dass die mehreren getrennten Kühlkanäle (18) im ersten Mantelsegment (12) zusammen mit den Verbindungskanälen (24) im zweiten Mantelsegment einen durchgehenden Kühlkanal des Gehäusemantels (10) bilden.

2. Elektrische Maschine gemäß Anspruch 1, wobei das zweite Mantelsegment (20) an seiner Außenfläche eine Eintrittsöffnung und eine Austrittsöffnung (30) zum Einleiten von Kühlfluid in den bzw. Ausleiten von Kühlfluid aus dem durchgehenden Kühlkanal aufweisen.

3. Elektrische Maschine gemäß einem der vorhergehenden Ansprüche, wobei die mehreren voneinander getrennten Kühlkanäle (18) im ersten Mantelsegment (12) parallel zueinander verlaufen.

4. Elektrische Maschine gemäß einem der vorhergehenden Ansprüche, wobei eine Mantelfläche des zweiten Mantelsegments (20) rechteckig ausgeführt ist.

5. Elektrische Maschine gemäß einem der vorhergehenden Ansprüche, wobei eine Mantelfläche des zweiten Mantelsegmentes (20) weniger als 20 Prozent einer Mantelfläche des ersten Mantelsegmentes (12) beträgt.

6. Elektrische Maschine gemäß einem der vorhergehenden Ansprüche, wobei eine Mantelfläche des zweiten Mantelsegmentes (20) weniger als 10 Prozent einer Mantelfläche des ersten Mantelsegmentes (12) beträgt.

7. Elektrische Maschine gemäß einem der vorhergehenden Ansprüche, wobei das erste (12) und/oder das zweite Mantelsegment (20) einstückig ausgeführt sind.

8. Elektrische Maschine gemäß einem der vorhergehenden Ansprüche, wobei das erste Mantelsegment (12) mit dem zweiten Mantelsegment (20) verschweißt ist.

9. Elektrische Maschine gemäß einem der vorhergehenden Ansprüche, wobei das erste Mantelsegment (12) durch Strangpressen gefertigt ist.

10. Elektrische Maschine gemäß einem der vorhergehenden Ansprüche, wobei das zweite Mantelsegment (20) gusstechnisch gefertigt ist.

## Claims

1. Electrical machine, in particular electrical radial flux machine, comprising a housing, the hollow-cylindrical housing casing (10) of which has:
a first casing segment (12) with a plurality of cooling ducts (18) which are separated from one another and which run from cooling duct openings (16) on a first circumferential end face (14) of the first casing segment (12), through the first casing segment (12), to cooling duct openings (16) on a second circumferential end face (14) of the first casing segment (12);
**characterized in that** the housing casing (10) has a second casing segment (20) with a plurality of connecting ducts (24) which each run from a connecting duct opening (26) for this purpose on the first circumferential end face (22) of the second casing segment (20), through the second casing segment (20), to a connecting duct opening (26) on a second circumferential end face (22) of the second casing segment (20);
wherein the connecting duct openings (26) in the end faces (22) of the second casing segment (20) are arranged such that in each case one connecting duct (24) connects two cooling ducts (18), which are adjacent in the first casing segment (12), to one another such that the plurality of separated cooling ducts (18) in the first casing segment (12) form a continuous cooling duct of the housing casing (10) together with the connecting ducts (24) in the second casing segment.

2. Electrical machine according to Claim 1, wherein the second casing segment (20) has, on its outer face, an inlet opening and an outlet opening (30) for conducting cooling fluid into and, respectively, conducting cooling fluid out of the continuous cooling duct.

3. Electrical machine according to either of the preceding claims, wherein the plurality of cooling ducts (18), which are separated from one another, run parallel to one another in the first casing segment (12).

4. Electrical machine according to one of the preceding claims, wherein a lateral surface of the second casing segment (20) is of rectangular design.

5. Electrical machine according to one of the preceding claims, wherein a lateral surface of the second casing segment (20) is less than 20% of a lateral surface of the first casing segment (12).

6. Electrical machine according to one of the preceding claims, wherein a lateral surface of the second casing segment (20) is less than 10% of a lateral surface of the first casing segment (12).

7. Electrical machine according to one of the preceding claims, wherein the first casing segment (12) and/or the second casing segment (20) are designed in one piece.

8. Electrical machine according to one of the preceding claims, wherein the first casing segment (12) is welded to the second casing segment (20).

9. Electrical machine according to one of the preceding claims, wherein the first casing segment (12) is manufactured by extrusion.

10. Electrical machine according to one of the preceding claims, wherein the second casing segment (20) is manufactured by casting.

## Revendications

1. Machine électrique, en particulier machine électrique à flux radial, comportant un carter dont l'enveloppe de carter (10) cylindrique creuse comporte :
un premier segment d'enveloppe (12) présentant une pluralité de canaux de refroidissement (18) séparés les uns des autres et qui s'étendent depuis des ouvertures de canaux de refroidissement (16), sur une première surface frontale circonférentielle (14) du premier segment d'enveloppe (12), à travers le premier segment d'enveloppe (12), vers des ouvertures de canaux de refroidissement (16) sur une seconde surface frontale circonférentielle (14) du premier segment d'enveloppe (12) ;
**caractérisé en ce que** l'enveloppe de carter (10) comporte un second segment d'enveloppe (20) pourvu d'une pluralité de canaux de liaison (24) qui s'étendent respectivement depuis une ouverture de canal de liaison (26) vers la première face frontale circonférentielle (22) du second segment d'enveloppe (20), à travers le second segment d'enveloppe (20), jusqu'à une ouverture de canal de liaison (26) sur une seconde face frontale circonférentielle (22) du second segment d'enveloppe (20) ;
dans lequel les ouvertures de canal de liaison (26) sont disposées dans les faces frontales (22) du second segment d'enveloppe (20) de telle sorte qu'un canal de liaison (24) relie respectivement l'un à l'autre deux canaux de refroidissement (18) voisins dans le premier segment d'enveloppe (12) de telle manière que la pluralité de canaux de refroidissement (18) séparés du premier segment d'enveloppe (12) forment avec les canaux de liaison (24) du second segment d'enveloppe un canal continu de l'enveloppe de carter (10).

2. Machine électrique selon la revendication 1, dans laquelle le second segment d'enveloppe (20) présente sur sa surface extérieure une ouverture d'entrée et une ouverture de sortie (30) permettant d'introduire du fluide de refroidissement dans le canal de refroidissement continu ou de prélever du fluide de refroidissement de ce dernier.

3. Machine électrique selon l'une des revendications précédentes, dans laquelle la pluralité de canaux de refroidissement (18) séparés les uns des autres dans le premier segment d'enveloppe (12) s'étendent parallèlement les uns aux autres.

4. Machine électrique selon l'une des revendications précédentes, dans laquelle une surface d'enveloppe du second segment d'enveloppe (20) est réalisée de manière rectangulaire.

5. Machine électrique selon l'une des revendications précédentes, dans laquelle une surface d'enveloppe du second segment d'enveloppe (20) est inférieure à 20% d'une surface d'enveloppe du premier segment d'enveloppe (12).

6. Machine électrique selon l'une des revendications précédentes, dans laquelle une surface d'enveloppe du second segment d'enveloppe (20) est inférieure à 10 % d'une surface d'enveloppe du premier segment d'enveloppe (12).

7. Machine électrique selon l'une des revendications précédentes, dans laquelle le premier (12) et/ou le second segment d'enveloppe (20) sont réalisés d'une seule pièce.

8. Machine électrique selon l'une des revendications précédentes, dans laquelle le premier segment d'enveloppe (12) est soudé au second segment d'enveloppe (20).

9. Machine électrique selon l'une des revendications précédentes, **caractérisée en ce que** le premier segment d'enveloppe (12) est fabriqué par extrusion.

10. Machine électrique selon l'une des revendications précédentes, dans laquelle le second segment d'enveloppe (20) est fabriqué par une technique de coulée.
